# EUROPÄISCHE PATENTSCHRIFT

(11) **EP 4 045 827 B1**
(45) Veröffentlichungstag und Bekanntmachung des Hinweises auf die Patenterteilung: **15.11.2023**
(21) Anmeldenummer: 20785726.9
(22) Anmeldetag: 30.09.2020
(51) Int. Cl.: F16L 5/02, F16L 5/04, F16L 5/10, F16L 5/06, F16L 5/08, H02G 3/22, H02G 15/013

(54) **LEITUNGSDURCHFÜHRUNG**
CABLE DUCT
PASSAGE DE CÂBLE

(30) Priorität: 15.10.2019 EP 19203192
(43) Veröffentlichungstag der Anmeldung: 24.08.2022
(73) Patentinhaber: Hilti Aktiengesellschaft, 9494 Schaan (LI)
(72) Erfinder: NGUYEN, Huu Toan, 9453 Eichberg (CH); HAKENHOLT, Christoph, 6800 Feldkirch (AT)
(74) Vertreter: Hilti Aktiengesellschaft Corporate Intellectual Property
(86) Internationale Anmeldenummer: PCT/EP2020/077333
(87) Internationale Veröffentlichungsnummer: WO 2021/073871

(56) Entgegenhaltungen:
- WO-A1-86/02136
- DE-A1-102006 035 475
- DE-A1-102010 063 652
- DE-C1- 3 636 663
- US-A1- 2011 094 759

## Beschreibung

Die Erfindung betrifft eine Leitungsdurchführung zum Durchführen wenigstens einer Leitung durch ein Bauteil mit einem Hüllrohr, einem Befestigungselement und wenigstens einem als flexibler Schlauchkörper ausgebildeten und innerhalb des Hüllrohrs angeordneten Dichtelement gemäß der im Oberbegriff von Patentanspruch 1 näher beschriebenen Art.

Derartige Leitungsdurchführungen dienen dem Durchführen von Leitungen, wie z. B. Rohrleitungen, Kabeln oder Kabelkanälen, durch Bauteile, wie z. B. durch Decken oder Wände und werden beim Erstellen eines Bauteils, wie einer Wand oder einer Decke, oder nachträglich in dieses eingebaut. Insbesondere können die Leitungsdurchführungen in Betondecken oder - wände eingegossen werden oder es können nachträglich Durchführungen in das Bauteil gebohrt, gesägt oder geschnitten werden. Vorzugsweise sind derartige Leitungsdurchführungen mit einer Brandschutzfunktion ausgerüstet. Vom Zeitpunkt des Einbaus bzw. Eingiessens in das Bauteil über die Installation der Leitung durch die Leitungsdurchführung bis hin zur Fertigstellung des Gebäudes besteht daher bereits ein Brandschutz. Wichtig bei derartigen Leitungsdurchführungen ist deren interne Dichtigkeit gegen gasförmige Medien, wie z. B. Rauchgas.

Aus der DE 10 2006 035 475 A1 ist eine Leitungsdurchführung bekannt, die in einem Bauteil, wie z. B. einer Betonwand, einbringbar ist. Die Leitungsdurchführung weist ein aus zwei Teilen bestehendes Hüllrohr und einen entlang seiner Längsachse verdrehbaren Schlauchkörper auf, an dessen erstem und zweitem axialen Schlauchende jeweils ein erstes respektive ein zweites Ringteil angeordnet sind, die als Stützelemente für den Schlauchkörper fungieren. Der Schlauchkörper ist an seinen beiden axialen Schlauchenden um insgesamt wenigstens 45°, vorzugsweise wenigstens 90°, gegeneinander verdrehbar, so dass ein Durchgang durch den Schlauchkörper verschließbar bzw. ein Innendurchmesser des Schlauchkörpers im Wesentlichen auf die Größe Null reduziert werden kann.

Von Nachteil bei dieser Leitungsdurchführung ist, dass der Schlauchkörper beispielsweise nach einer Durchführung einer Leitung durch einen Anwenderfehler nicht oder nicht ausreichend geschlossen wird und bei Nichterkennen ein Gasdurchtritt durch die Leitungsdurchführung gegebenenfalls nicht sicher verhindert ist.

Der vorliegenden Erfindung liegt daher die Aufgabe zugrunde, eine Leitungsdurchführung zum Durchführen von Leitungen durch Bauteile bereitzustellen, mittels der ein Durchgang durch den Schlauchkörper sicher verschließbar ist.

Es wird somit eine Leitungsdurchführung zum Durchführen wenigstens einer Leitung durch ein Bauteil vorgeschlagen, wobei die Leitungsdurchführung mit einem Hüllrohr, einem Befestigungselement und wenigstens einem als flexibler Schlauchkörper ausgebildeten und innerhalb des Hüllrohrs angeordneten Dichtelement ausgeführt ist, wobei der Schlauchkörper in einem ersten axialen Endbereich mit dem Befestigungselement verbunden ist und zwischen einer Schließposition, in der der Schlaukörper einen Durchgang durch den Schlauchkörper zumindest teilweise verschließt bzw. ein Innendurchmesser des Schlauchkörpers zumindest teilweise verschlossen ist, und einer Öffnungsposition, in der der Durchgang bzw. der Innendurchmesser des Schlauchkörpers zumindest teilweise freigegeben ist, verlagerbar ist.

Erfindungsgemäß wird vorgeschlagen, dass eine Federeinrichtung vorgesehen ist, die das gegenüber dem Hüllrohr in axialer Richtung verlagerbare Befestigungselement mit einer Kraft beaufschlagt, die den Schlauchkörper in Richtung seiner Schließposition drückt.

Mit der erfindungsgemäßen Lösung kann auf konstruktiv einfache Weise sichergestellt werden, dass der Schlauchkörper unabhängig von einer Anzahl und einer Größe von durch den Schlauchkörper durchgeführten Leitungen in einem Grundzustand seine Schließposition einnimmt, in der der Durchgang insbesondere vollständig verschlossen ist. Ein Durchtritt von Gas durch die Leitungsdurchführung ist dabei unabhängig von der Anzahl und einer Größe der durch die Leitungsdurchführung geführten und innerhalb des Schlauchkörpers angeordneten Leitungen sicher verhindert. Der Schlauchkörper wird nach einer anwenderseitigen Betätigung durch das Vorsehen der Federeinrichtung zuverlässig in die Schließposition überführt, so dass Anwenderfehler sicher verhinderbar sind.

Das Hüllrohr kann beispielsweise einen kreisförmigen, einen elliptischen, einen quadratischen, einen rechteckigen, einen dreieckigen, einen mehreckigen oder dergleichen Querschnitt aufweisen.

Bei einer vorteilhaften Ausführungsform der Leitungsdurchführung ist der Schlauchkörper entlang seiner Längsachse verdrehbar, wobei die Federeinrichtung als Torsionsfeder ausgeführt ist und die Torsionsfeder eine axiale Verlagerung des Befestigungselements in eine Verdrehung des Schlauchkörpers umwandelt. Hierdurch ist der Schlauchkörper zwischen seiner Schließposition und seiner Öffnungsposition, in der der Schlauchkörper den Durchgang durch den Schlauchkörper zur Durchführung von Leitungen zumindest teilweise freigibt, verlagerbar. Der Schlauchkörper ist dabei insbesondere um seine Längsachse verdrehbar gelagert. Die Torsionsfeder wirkt vorzugsweise einerseits mit dem insbesondere ringförmig ausgeführten Befestigungselement und andererseits mit dem Hüllrohr zusammen. Durch eine Verdrehung des Schlauchkörpers aufgrund seiner Elastizität ist sein Innendurchmesser variierbar. In seiner Schließposition liegt der Schlauchkörper dichtend an einer durchgeführten Leitung an. Der Kontakt zwischen Leitung und Schlauchkörper erstreckt sich dabei axial über eine gewisse Länge, wodurch eine hohe Dichtigkeit erreicht wird. In seiner Öffnungsposition weist der Schlauchkörper vorzugsweise einen großen Öffnungsquerschnitt auf, so dass Leitungen einfach durch den Schlauchkörper hindurchgeführt werden können ohne den Schlauchkörper zu beschädigen.

Die Federeinrichtung kann bei einer konstruktiv einfachen Ausführung der Leitungsdurchführung auch als Zugfeder ausgeführt sein, die vorzugsweise einerseits mit dem insbesondere ringförmig ausgeführten Befestigungselement und andererseits mit dem Hüllrohr zusammenwirkt.

Um eine Überführung des Schlauchkörpers in seine Schließposition besonders sicher durchführen zu können, kann in einem vorzugweise in Längsrichtung des Schlauchkörpers mittigen Bereich des Schlauchkörpers eine Einrichtung vorgesehen sein, die den Schlauchkörper in Richtung seiner Schließposition vorspannt. Die vorzugsweise elastische Einrichtung umgreift insbesondere den Schlauchkörper vollständig und überführt diesen in unbelastetem Zustand in seine Schließposition. Andererseits kann der Schlauchkörper entgegen einer von der Einrichtung auf den Schlauchkörper wirkenden Kraft durch die Aufbringung einer äußeren Kraft in seine Öffnungsposition überführt werden.

Die Einrichtung ist bei einer konstruktiv einfachen Ausbildung der Erfindung als Federeinrichtung, als elastisches Band, als Gummiband oder dergleichen ausgeführt.

Alternativ oder zusätzlich hierzu kann es vorgesehen sein, dass zwei in Längsrichtung zueinander bewegbar gelagerte Abdichtelemente vorgesehen sind, wobei ein erstes zumindest bereichsweise röhrenförmig ausgeführtes Abdichtelement und ein zweites zumindest bereichsweise röhrenförmig ausgeführtes Abdichtelement in einander zugewandten Endbereichen jeweils mehrere umfangsseitig verteilt angeordnete streifenförmige, insbesondere lamellenförmige Elemente aufweisen, wobei einander zugewandte Endbereich der streifenförmigen Elemente bei einer Verlagerung der Abdichtelemente in Längsrichtung aufeinander zu, durch ein Zusammenwirken der streifenförmigen Elemente des ersten Abdichtelements mit den streifenförmigen Elementen des zweiten Abdichtelements zumindest bereichsweise quer zur Längsrichtung nach innen verlagert sind. Auf dieses Weise ist eine besonderes gute Abdichtung erzielbar, da die insbesondere vollständig umfangsseitig verteilt angeordneten streifenförmigen Elemente auch bei mehreren durch die Leitungsdurchführung geführten Kabeln, Leitungen, Rohren oder dergleichen eine sichere Anlage des Schlauchkörpers an den durchgeführten Elementen auch dann ermöglichen, wenn die durchgeführten Elemente gemeinsam keinen kreisrunden Querschnitt aufweisen und beispielsweise in Umfangsrichtung starke Querschnittsänderungen, wie beispielsweise Kabelzwischenräume, vorliegen.

Insbesondere bei einer Ausführung der streifenförmigen Elemente als Lamellen ist auf einfache Weise sicherstellbar, dass durch ein Zusammenwirken der Lamellen der beiden Abdichtelemente der Schlauchkörper in sämtlichen Umfangsbereichen den Schlauchkörper dicht an die durch die Leitungsdurchführung geführten Elemente, wie Kabel, Leitungen, Rohre oder dergleichen, gepresst ist und eine gute Abdichtung erzielt ist.

Die Abdichtelemente und/oder die streifenförmigen Elemente sind insbesondere mit Kunststoff oder einem Metall ausgeführt, wobei es sich insbesondere um ein Spritzgussteil oder ein Blechbiegeteil handeln kann.

Die Abdichtelemente sind in einander abgewandten Endbereichen insbesondere an das jeweilige Befestigungselement angebunden, so dass eine Verlagerung der Befestigungselemente zueinander zu einer Verlagerung der Abdichtelemente zueinander führt.

Um auf einfache Weise sicherzustellen, dass die streifenförmigen Elemente in der Schließposition für eine sichere Abdichtung sorgen, können einander zugewandte Enden der streifenförmigen Elementen in unbelastetem Zustand in radialer Richtung zumindest geringfügig in radialer Richtung nach innen umgebogen sein.

Es kann bei der Ausführung mit den zwei Abdichtelementen vorgesehen sein, dass der Schlauchkörper durch eine ausschließlich axiale Verlagerung der Abdichtelemente und des Schlauchkörpers bei einer Überführung zwischen der Offenposition und der Schließposition vorliegt. Alternativ hierzu kann es vorgesehen sein, dass Endbereiche des Schlauchkörpers zur Überführung zwischen der Offenposition und der Schließposition gegeneinander verdreht werden.

Die Abdichtelemente umfassen vorzugsweise den Schlauchkörper vollständig umfangsseitig.

Um den Zustand der Leitungsdurchführung auf einfache Weise überwachen zu können, kann eine Sensoreinrichtung vorgesehen sein, mittels der insbesondere die Schließposition und/oder die Öffnungsposition des Schlauchkörpers ermittelbar ist. Mittels der Sensoreinrichtung ist der Zustand des Schlauchkörpers durch den Einsatz entsprechender, insbesondere drahtloser Mittel auch ohne visuelle Überprüfung sicher ermittelbar.

Die Sensoreinrichtung ist bei einer vorteilhaften Ausführungsform als Kontaktsensor, insbesondere als RFID-Sensor, oder als berührungsloser Sensor ausgeführt, wobei grundsätzlich vielfältige Bauformen von Sensoren zum Einsatz kommen können.

Das Befestigungselement ist bei einer einfachen Ausführung der Erfindung als Ringelement ausgeführt, das den Schlauchkörper in dem axialen Endbereich vorzugsweise komplett umfangsseitig umfasst. Das Ringelement kann dabei einen beispielsweise nach außen offenen Ringkanal aufweisen, der beispielsweise zum Zusammenwirken mit der Federeinrichtung vorgesehen ist.

Bei einer vorteilhaften Ausführungsform der Leitungsdurchführung nach der Erfindung ist eine Verlagerungseinrichtung vorgesehen, mittels welcher das Befestigungselement in axialer Richtung bzw. in Längsrichtung der Leitungsdurchführung verlagerbar und der Schlauchkörper in Richtung seiner Öffnungsposition verlagerbar ist. Auf diese Weise ist eine von einem Benutzer einfach durchzuführende Verlagerung des Schlauchkörpers entgegen der Federkraft der Federeinrichtung von der Schließposition in die Öffnungsposition umsetzbar.

Zur vorteilhaften Übertragung einer anwenderseitig eingebrachten Kraft auf das Befestigungselement kann die Verlagerungseinrichtung ein Hebelelement aufweisen, welches einerseits in axialer Richtung fixiert mit dem Befestigungselement zusammenwirkt und andererseits zum Zusammenwirken mit dem Hüllrohr, insbesondere einem fest mit dem Hüllrohr verbundenen Anschlag, ausgeführt ist. Das Hebelelement kann beispielsweise im Wesentlichen U-förmig ausgeführt sein und beispielsweise mit Endbereichen der U-Schenkel in den nach außen offenen Ringkanal des Ringelements eingreifen.

Um eine Handhabung der Verlagerungseinrichtung zu vereinfachen, kann die Verlagerungseinrichtung ein von einem Anwender betätigbares Griffelement aufweisen, welches insbesondere fest mit dem Hebelelement verbunden ist.

Bei einer vorteilhaften Ausführungsform der Leitungsdurchführung ist der Schlauchkörper in einem dem ersten axialen Endbereich abgewandten zweiten Endbereich mit einem weiteren Befestigungselement verbunden, wobei eine weitere Federeinrichtung vorgesehen ist, die das gegenüber dem Hüllrohr in axialer Richtung verlagerbare weitere Befestigungselement mit einer Kraft beaufschlagt, die den Schlauchkörper in Richtung seiner Schließposition drückt, wobei eine weitere Verlagerungseinrichtung vorgesehen ist, mittels welcher das Befestigungselement in axialer Richtung verlagerbar und der Schlauchkörper in Richtung seiner Öffnungsposition verlagerbar ist. Der Schlauchkörper und das Hüllrohr können dabei im zweiten Endbereich vergleichbar zum ersten Endbereich ausgeführt sein, wobei das weitere Befestigungselement, die weitere Federeinrichtung und die weitere Verlagerungseinrichtung im Wesentlichen vergleichbar zu dem Befestigungselement, der Federeinrichtung und der Verlagerungseinrichtung ausgeführt sein können. Durch diese Ausführung ist der Schlauchkörper in montiertem Zustand von beiden Seiten in die Öffnungsposition überführbar und Leitungen durch die Leitungsdurchführung führbar. Dies ist insbesondere bei in einer Wand montiertem Zustand der Leitungsdurchführung von Vorteil.

Der Schlauchkörper ist vorzugsweise sehr dünn ausgeführt und weist vorzugsweise eine Materialstärke von 0,01 bis 2 mm auf. Der Schlauchkörper kann in seinem mittleren Bereich eine Taillierung aufweisen. Hierdurch wird der maximal mögliche Öffnungsquerschnitt begrenzt, so dass bei nicht mit einer Leitung belegter Leitungsdurchführung der offene Querschnitt im geöffneten Zustand nicht unerwünscht groß ist.

Der Schlauchkörper ist vorzugsweise mit einem gasdichten Material, wie beispielsweise einem Gewebe, Gummi, Folienmaterial oder dergleichen ausgeführt, das gleichzeitig elastisch ist.

Bei einer vorteilhaften Ausführung der Leitungsdurchführung ist innen an dem Schlauchkörper ein elastisches Material, wie z. B. ein Schaumstoff- oder Gummimaterial, angeordnet. Hierdurch kann die Dichtigkeit zwischen einer durch den Schlauchkörper hindurchgeführten Leitung und dem Schlauchkörper weiter verbessert werden.

Bei einer vorteilhaften Ausführung einer Leitungsdurchführung nach der Erfindung ist ein Abschottmittel vorgesehen. Das Abschottmittel kann beispielsweise als ein Ring aus intumeszierendem Material ausgeführt sein und stellt den Brandschutz der Leitungsdurchführung sicher. Das Abschottmittel kann beispielsweise im Bereich des Befestigungselements oder in der Mitte des Hüllrohrs angeordnet sein.

Weitere Vorteile ergeben sich aus der folgenden Figurenbeschreibung. In den Figuren sind Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine dreidimensionale Ansicht einer Leitungsdurchführung mit einem Hüllrohr und einem mittels eines Hebels betätigbaren Befestigungselement, wobei ein mit dem Befestigungselement verbundenes und in dem Hüllrohr angeordneter Schlauchkörper nicht gezeigt ist;
- Fig. 2: eine Längsschnittansicht der Leitungsdurchführung gemäß Fig. 1;
- Fig. 3: eine stark vereinfachte Prinzipskizze einer alternativ ausgeführten Leitungsdurchführung; und
- Fig. 4: eine weitere stark vereinfachte Prinzipskizze einer weiteren alternativ ausgeführten Leitungsdurchführung.

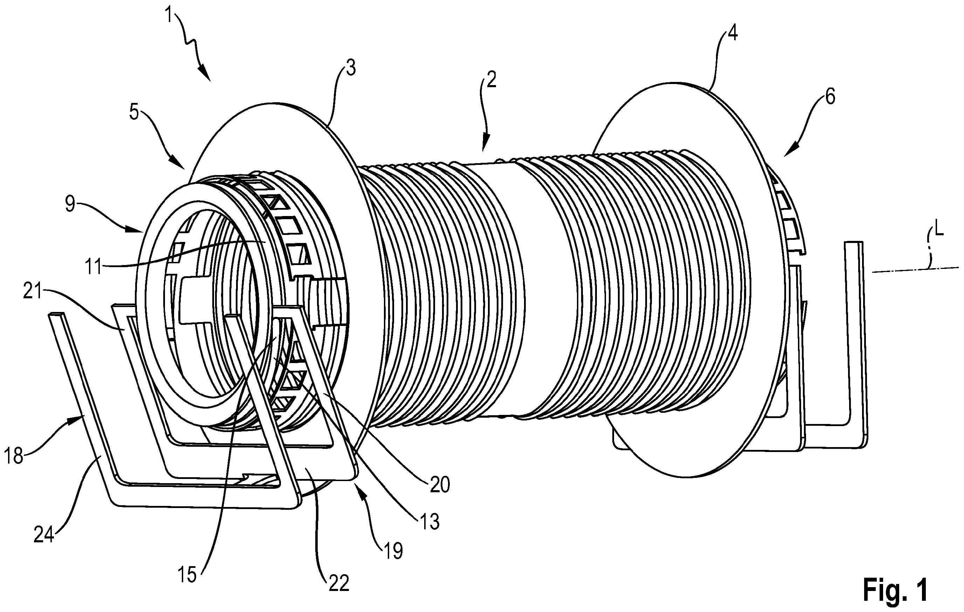

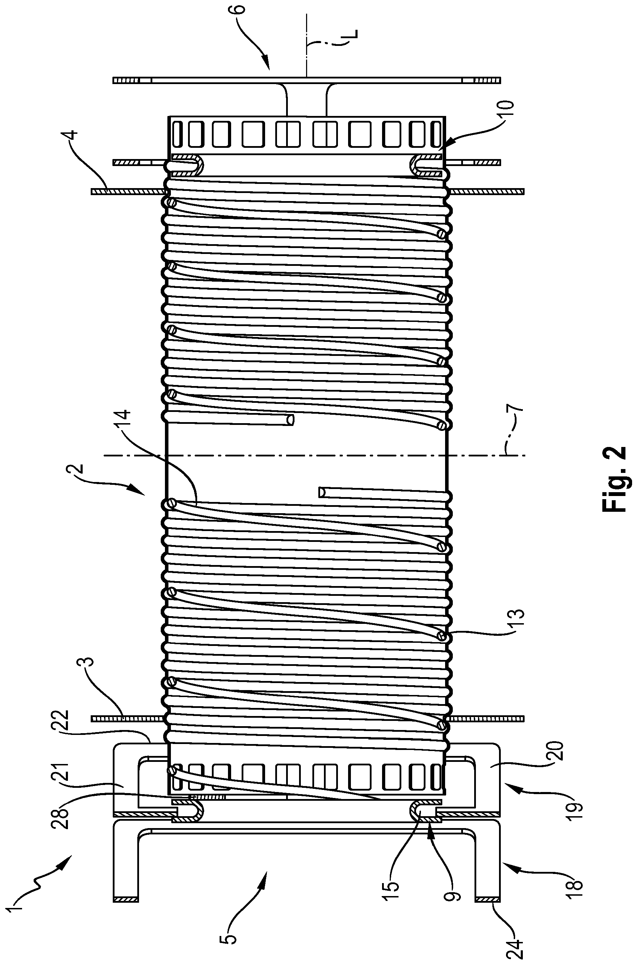

Fig. 1 und Fig. 2 zeigen eine erste Ausführungsform einer Leitungsdurchführung 1 mit einem formstabilen Hüllrohr 2, das zwei zum Zusammenwirken mit einem Bauteil, beispielsweise einer Betonwand, vorgesehene Ringkörper 3, 4 aufweist. Die Leitungsdurchführung 1 kann dabei nachträglich in eine Öffnung in dem Bauteil eingebracht werden oder bei der Erstellung des Bauteils in dieses eingearbeitet werden. Die Montageelemente darstellenden Ringkörper 3, 4 sind zur Sicherung der Leitungsdurchführung 1 gegen Zug- und Schubkräfte vorgesehen und bilden Montageflansche, die vorzugsweise Ausnehmungen zur Durchführung von Befestigungselementen, wie z. B. Schrauben oder Nägeln, zur Festlegung der Ringkörper 3, 4 an dem Bauteil aufweisen.

Die Leitungsdurchführung 1 ist vorliegend im Wesentlichen symmetrisch zu einer Mittelquerebene 7, die senkrecht zu einer Längsachse L der Leitungsdurchführung 1 angeordnet ist, ausgeführt, wobei zwei Endbereiche 5, 6 im Wesentlichen vergleichbar zueinander ausgebildet sind. Der erste Endbereich 5 wird im Folgenden stellvertretend für den zweiten Endbereich 6 beschrieben.

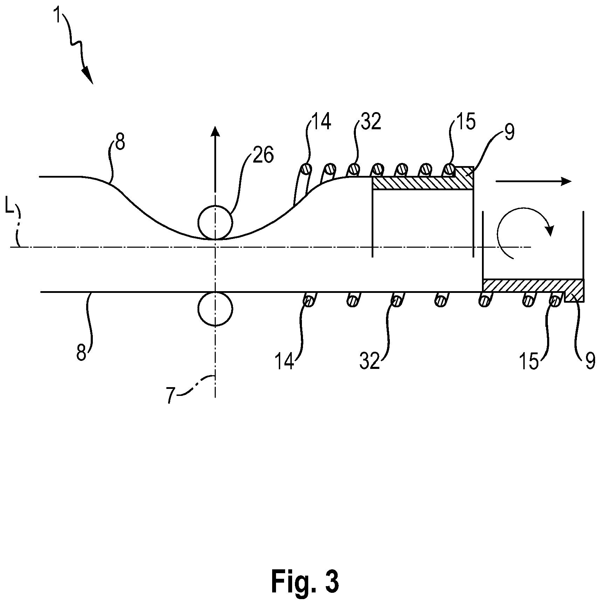

Die Leitungsdurchführung 1 weist weiterhin ein beispielsweise in Fig. 3 näher ersichtliches, sich entlang seiner Längsachse L erstreckendes Dichtelement 8 auf, welches hier als flexibler, um die Längsachse L als Drehachse verdrehbarer Schlauchkörper bzw. als Schlauchelement ausgeführt ist. Das Schlauchelement 8 ist vergleichbar zu der Darstellung in Fig. 3 in seinen Endbereichen jeweils mit einem Befestigungselement 9 bzw. 10 verbunden, welche hier jeweils als Ringelement mit einem nach außen offenen Kanal 11 ausgeführt sind.

Das Schlauchelement 8 besteht dabei beispielsweise aus einem flexiblen und/oder elastischen, dünnwandigen und gasdichten Gummi- Gewebe- oder Folienmaterial und ist innen mit einem elastischen Material, wie beispielsweise einem Schaumstoff- oder Gummimaterial versehen. Als dünnwandig wird hierbei verstanden, dass die Wandstärke des Materials vorliegend etwa 0,01 mm bis ca. 2 mm beträgt. Das elastische Material kann beispielsweise in Form einer durchgehenden Beschichtung innen am Schlauchelement 8 angeordnet sein oder nur bereichsweise beispielsweise in Form von in Längsrichtung des Schlauchelements 8 angeordneten Streifen oder Rippen. Das Schlauchelement 8 kann eine Taillierung aufweisen, die im in dem Hüllrohr 2 der Leitungsdurchführung 1 eingebauten Zustand einen Innendurchmesser aufweist, der kleiner als ein maximaler Durchmesser des Schlauchelements 8, insbesondere im Bereich der Anbindung an die Ringelemente 9 ist. Der Innendurchmesser des Schlauchelements 8 beschreibt dabei eine durchschnittliche Öffnungsweite des Schlauchelements 8, so dass auch Schlauchelemente mit einem ovalen oder polygonalen Querschnitt, also nicht kreisförmigen Querschnitten nach dieser Definition einen Innendurchmesser aufweisen. Das Schlauchelement 8 bzw. der Schlauchkörper ist an seinen beiden axialen Schlauchenden vorliegend um insgesamt wenigstens 45°, vorzugsweise wenigstens 90°, gegeneinander verdrehbar, so dass der Innendurchmesser des Schlauchelements 8 auf die Grösse Null reduziert werden kann.

Das Schlauchelement 8 ist in den Endbereichen vorzugsweise vollumfänglich mit den Ringelementen 9, 10 verbunden, wobei die Ringelemente 9, 10 die Endbereiche des Schlauchelements 8 vorliegend umfangsseitig umgeben. Innerhalb des Hüllrohrs 2 ist eine hier als Torsionsfeder ausgeführte Federeinrichtung 13 angeordnet, die mit einem der Mittelquerebene 7 zugewandten ersten Endbereich 14 drehfest mit dem Hüllrohr 2 verbunden ist. Mit einem der Mittelquerebene 7 abgewandten Endbereich 15 ist die Torsionsfeder 13 in dem hier einen U-förmigen Querschnitt aufweisenden Kanal 11 des Befestigungselements 9 angeordnet und fest mit dem Befestigungselement 9 verbunden.

Das Befestigungselement 9 ist in Längsrichtung L gegenüber dem Hüllrohr 2 verlagerbar und gegenüber dem Hüllrohr 2 drehbar angeordnet. Eine Verlagerung des Befestigungselements 9 in Längsrichtung L führt somit durch die Torsionsfeder 13 zu einer Verdrehung des Befestigungselements 9 um die Längsrichtung L. Hierdurch wird das Schlauchelement 8 durch die Anbindung an das Befestigungselement 9 ebenfalls um die Längsrichtung L verdreht. Die Ausführung ist derart gewählt, dass in einer ersten Endposition des Befestigungselements 9, in der dieser maximal in Richtung der Mittelquerebene 7 verlagert ist, das Schlauchelement 8 eine Schließposition einnimmt, in der ein Durchgang innerhalb des Schlauchelements 8 sowohl bei einer Durchführung von einer oder mehrerer Leitungen durch das Schlauchelement 8 als auch bei keiner Durchführung von Leitungen oder Kabeln komplett verschlossen ist und hierdurch ein Gasdurchtritt sicher verhindert ist.

Bei einer Verlagerung des Befestigungselements 9 in ein der Mittelquerebene 7 abgewandte Richtung in Richtung einer zweiten Endposition des Befestigungselements 9 wird das Schlauchelement 8 durch die von der Torsionsfeder 13 verursachte Verdrehung des Befestigungselements 9 entgegen einer Federkraft der Torsionsfeder 13 in Richtung einer Öffnungsposition verdreht bzw. entdreht, wobei hierbei eine Durchgangsöffnung durch das Schlauchelement 8 insbesondere zur Anordnung von Leitungen oder Kabeln freigegeben wird.

Um das Befestigungselement 9 in Längsrichtung L auf einfache Weise von der ersten Endposition in Richtung der zweiten Endposition verlagern zu können, ist vorliegend eine Verlagerungseinrichtung 18 vorgesehen, die mit einem Hebelelement 19 ausgeführt ist. Das Hebelelement 19 ist vorliegend U-förmig ausgeführt und greift mit Schenkeln 20, 21 jeweils in den Kanal 11 des Befestigungselements 9 ein. Ein die Schenkel 20, 21 verbindender Schenkel 22 des Hebelelements 19 ist zum Zusammenwirken mit dem Hüllrohr 2, hier dem Ringkörper 3 ausgeführt, der einen Anschlag für das Hebelelement 19 bildet. Die Verlagerungseinrichtung 18 weist weiterhin ein fest mit dem Hebelelement 19 verbundenes Griffelement 24 auf, mittels welchem die Verlagerungseinrichtung 18 anwenderfreundlich zu bedienen ist.

Bei einer anwenderseitigen Verlagerung eines hier der Längsachse L zugewandten Bereichs des Griffelements 24 stützt sich der Schenkel 23 an dem Ringkörper 3 ab und die Schenkel 20, 21 verlagern das Befestigungselement 9 in eine der Mittelquerebene 7 abgewandte Richtung gegenüber dem Hüllrohr 2. Dies führt wie oben näher beschrieben zu einer Überführung des Schlauchelements 8 von der Schließposition in Richtung der Öffnungsposition. Ohne eine externe Kraftaufbringung auf das Griffelement 24 wird das Befestigungselement 9 aufgrund der in der Torsionsfeder 13 gespeicherten Energie in Längsrichtung L zurück in Richtung seiner ersten Endposition überführt, wobei das Schlauchelement 8 hierdurch in seine Schließposition überführt wird.

Um in der Schließposition auf besonders sichere Weise gewährleisten zu können, dass der Durchgang durch das Schlauchelement 8 vorzugsweise vollständig verschlossen ist, kann in einem vorzugsweise der Mittelquerebene 7 zugewandten Bereich oder im Bereich der Mittelquerebene 7 eine vorzugsweise elastische Einrichtung 26 das Schlauchelement 8 beispielsweise vollständig umfangsseitig umfassen, wobei die Einrichtung 26 den Schlauchkörper 8 mit einer den Schlauchkörper 8 in seine Schließposition drückenden Kraft beaufschlagt. Die Einrichtung 26 kann beispielsweise als Federeinrichtung, elastischen Band oder Gummiband ausgeführt sein.

Um den Zustand der Leitungsdurchführung 1, d. h., ob sich das Schlauchelement 8 in der Schließposition befindet, insbesondere auch von einem von der Leitungsdurchführung 1 entfernten Ort feststellen zu können, kann eine hier nur schematisch gezeigte Sensoreinrichtung 28 vorgesehen sein. Die Sensoreinrichtung 28 ist hier als Kontaktsensor in Form eines RFID-Sensor ausgeführt, wobei Signale von der Sensoreinrichtung 28 drahtgebunden oder vorzugsweise drahtlos an eine externe Einrichtung, wie beispielsweise ein Mobiltelefon oder einen Server, übermittelt werden, so dass von diesen aus der Zustand der Leitungsdurchführung 1 überwachbar ist.

Die Leitungsdurchführung 1 kann weiterhin ein hier nicht näher gezeigtes Abschottmittel aufweisen, das beispielsweise mit dem Hüllrohr 2 oder dem Befestigungselement 9 verbunden sein kann. Das Abschottmittel 19 ist beispielsweise ein Ring aus einem intumeszierenden Material und stellt den Brandschutz der Leitungsdurchführung 1 sicher.

Durch die symmetrische Ausführung der Leitungsdurchführung 1 kann das Schlauchelement 8 vorteilhafterweise von beiden Endbereichen 5, 6 jeweils von der Schließposition in die Öffnungsposition und umgekehrt überführt werden. Dies ist insbesondere in montiertem Zustand der Leitungsdurchführung 1 vorteilhaft.

In Fig. 3 ist auf stark vereinfachte Weise ein alternatives Funktionsprinzip einer Leitungsdurchführung 1 gezeigt, wobei eine das Schlauchelement 8 in Richtung der Schließposition vorspannende Federeinrichtung hier als Zugfeder 32 ausgeführt ist. Die Zugfeder 32 ist einenends fest mit dem Befestigungselement 9 und andernends fest mit dem Hüllrohr 2 verbunden. Zusätzlich ist bei dieser Ausführungsform in einem mittigen Bereich die Einrichtung 26 vorgesehen, die das Schlauchelement 8 in Richtung der Schließposition mit einer Kraft beaufschlagt.

Ausgehend von der Schließposition des Schlauchelements 8 in der oberen Darstellung gemäß Fig. 3, ist das Befestigungselement 9 analog der obigen Ausführungen mit Hilfe der Verlagerungseinrichtung 18 in die im unteren Teil der Fig. 3 gezeigte Öffnungsposition verlagerbar, wobei das Befestigungselement 9 hierdurch in eine der Mittelquerebene 7 abgewandte Richtung entgegen der von der Einrichtung 26 aufgebrachten Kraft in axialer Richtung verlagert wird. Aufgrund des Vorsehens der Zugfeder 32 wird das Schlauchelement 8 hierbei beispielsweise nicht um die Längsachse L verdreht. Ohne eine Aufbringung einer externen Kraft auf das Befestigungselement 9 wird das Befestigungselement 9 durch die Zugfeder 32 zurück in Richtung seiner ersten Endposition verlagert, wobei durch die Einrichtung 26 sicherstellt ist, dass ein Durchgang durch das Schlauchelement 8 hierbei sicher verschlossen ist.

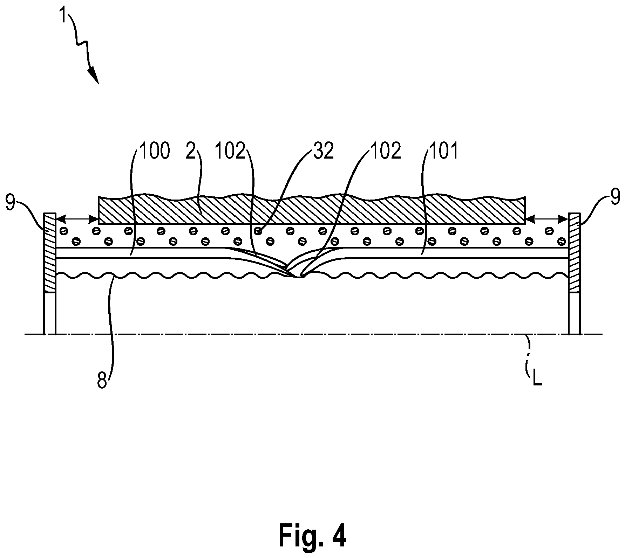

In Fig. 4 ist auf stark vereinfachte Weise ein weiteres alternatives Funktionsprinzip einer Leitungsdurchführung 1 gezeigt, wobei lediglich auf die Unterschiede zu den vorherigen Ausführungsbeispielen eingegangen wird und ansonsten auf die Ausführungen zu den oben näher beschriebenen Ausführungsbeispielen verwiesen wird.

Eine das Schlauchelement 8 in Richtung der Schließposition vorspannende Federeinrichtung ist hier als Spiral-Zugfeder 32 ausgeführt, wobei die Spiral-Zugfeder 32 mit beiden Enden an das jeweilige Befestigungselemente 9 angebunden ist. Die Befestigungselemente 9 weisen jeweils ein fest an das Befestigungselement 9 angebundenes, insgesamt röhrenförmiges Abdichtelement 100 bzw. 101 auf, wobei die Abdichtelemente 100, 101 in radialer Richtung zwischen dem Schlauchelement 8 und der Spiral-Zugfeder 32 bzw. dem Hüllrohr 2 angeordnet sind.

In einander zugewandten Bereichen weisen die Abdichtelemente 100, 101 jeweils umfangsseitig verteilt angeordnete, als Lamellen 102 ausgeführte streifenförmige Elemente auf, die in einander zugewandten Endbereichen in unbelastetem Zustand in radialer Richtung nach innen umgebogen oder geknickt sind.

In Fig. 4 ist die Offenposition näher dargestellt, in der die Befestigungselemente 9 beispielsweise in Längsrichtung L maximal voneinander entfernt sind. Werden die Befestigungselemente 9 beispielsweise ohne Kraftaufbringung über die Verlagerungseinrichtung 18 durch die Spiral-Zugfeder 32 aufeinander zubewegt, bewegen sich die Lamellen 102 der Abdichtelemente 100, 101 durch ein Zusammenwirken der Lamellen 102 der ersten Abdichteinrichtung 100 mit den Lamellen 102 der zweiten Abdichteinrichtung 101 in radialer Richtung nach innen. Hierbei drücken die Lamellen 102 das Schlauchelement 8 über den gesamten Umfang verteilt in radialer Richtung nach innen insbesondere dichtend in Anlage mit gegebenenfalls durch die Leitungsdurchführung 1 geführte Kabel, Leitung oder dergleichen, so dass eine gute Abdichtung erzielt ist.

Die Spiral-Zugfeder 32 ist derart ausgeführt, dass diese sowohl in der Offenposition als auch in der Schließposition die Befestigungselemente 9 mit einer aufeinander zugerichteten Zugkraft beaufschlagt.

## Patentansprüche

1. Leitungsdurchführung (1) zum Durchführen wenigstens einer Leitung durch ein Bauteil mit einem Hüllrohr (2), einem Befestigungselement (9) und wenigstens einem als flexibler Schlauchkörper ausgebildeten und innerhalb des Hüllrohrs (2) angeordneten Dichtelement (8), wobei der Schlauchkörper (8) in einem ersten axialen Endbereich (5) mit dem Befestigungselement (9) verbunden ist und zwischen einer Schließposition, in der der Schlauchkörper (8) einen Durchgang durch den Schlauchkörper (8) zumindest teilweise verschließt, und einer Öffnungsposition, in der ein Durchgang durch den Schlauchkörper (8) zumindest teilweise freigegeben ist, verlagerbar ist,
**dadurch gekennzeichnet,**
**dass** eine Federeinrichtung (13; 26; 32) vorgesehen ist, die das gegenüber dem Hüllrohr (2) in axialer Richtung verlagerbare Befestigungselement (9) mit einer Kraft beaufschlagt, die den Schlauchkörper (8) in Richtung seiner Schließposition drückt.

2. Leitungsdurchführung nach Anspruch 1, **dadurch gekennzeichnet, dass** der Schlauchkörper (8) entlang seiner Längsachse (L) verdrehbar ist, wobei die Federeinrichtung (13) als Torsionsfeder ausgeführt ist und die Torsionsfeder (13) eine axiale Verlagerung des Befestigungselements (9) in eine Verdrehung des Schlauchkörpers (8) umwandelt.

3. Leitungsdurchführung nach Anspruch 1, **dadurch gekennzeichnet, dass** die Federeinrichtung (32) als Zugfeder ausgeführt ist.

4. Leitungsdurchführung nach einem der Ansprüche 1 bis 3, **dadurch gekennzeichnet, dass** zwei in Längsrichtung (L) zueinander bewegbar gelagerte Abdichtelemente (100, 101) vorgesehen sind, wobei ein erstes zumindest bereichsweise röhrenförmig ausgeführtes Abdichtelement (100) und ein zweites zumindest bereichsweise röhrenförmig ausgeführtes Abdichtelement (101) in einander zugewandten Endbereichen jeweils mehrere umfangsseitig verteilt angeordnete streifenförmige, insbesondere lamellenförmige Elemente (102) aufweisen, wobei einander zugewandte Endbereich der streifenförmigen Elemente (102) bei einer Verlagerung der Abdichtelemente (100, 101) in Längsrichtung (L) aufeinander zu, durch ein Zusammenwirken der streifenförmigen Elemente (102) des ersten Abdichtelements (100) mit den streifenförmigen Elementen (102) des zweiten Abdichtelements (101) zumindest bereichsweise quer zur Längsrichtung (L) nach innen verlagert sind.

5. Leitungsdurchführung nach einem der Ansprüche 1 bis 4, **dadurch gekennzeichnet, dass** eine Sensoreinrichtung (28) vorgesehen ist, mittels der zumindest eine Schließposition des Schlauchkörpers (8) ermittelbar ist.

6. Leitungsdurchführung nach Anspruch 5, **dadurch gekennzeichnet, dass** die Sensoreinrichtung (28) als Kontaktsensor, insbesondere als RFID-Sensor, oder als berührungsloser Sensor ausgeführt ist.

7. Leitungsdurchführung nach einem der Ansprüche 1 bis 6, **dadurch gekennzeichnet, dass** das Befestigungselement (9) als Ringelement ausgeführt ist.

8. Leitungsdurchführung nach einem der Ansprüche 1 bis 7, **dadurch gekennzeichnet, dass** eine Verlagerungseinrichtung (18) vorgesehen ist, mittels welcher das Befestigungselement (8) in Längsrichtung (L) verlagerbar ist.

9. Leitungsdurchführung nach Anspruch 8, **dadurch gekennzeichnet, dass** die Verlagerungseinrichtung (18) ein Hebelelement (19) aufweist, welches einerseits in Längsrichtung (L) fixiert mit dem Ringelement (9) zusammenwirkt und andererseits zum Zusammenwirken mit dem Hüllrohr (2), insbesondere einem fest mit dem Hüllrohr (2) verbundenen Anschlag (3, 4), ausgeführt ist.

10. Leitungsdurchführung nach einem der Ansprüche 8 oder 9, **dadurch gekennzeichnet, dass** die Verlagerungseinrichtung (18) ein Griffelement (24) aufweist.

11. Leitungsdurchführung nach einem der Ansprüche 1 bis 10, **dadurch gekennzeichnet, dass** der Schlauchkörper (8) in einem dem ersten axialen Endbereich (5) abgewandten zweiten Endbereich (6) mit einem weiteren Befestigungselement (10) verbunden ist, wobei eine weitere Federeinrichtung vorgesehen ist, die das gegenüber dem Hüllrohr (2) in Längsrichtung (L) verlagerbare weitere Befestigungselement (10) mit einer Kraft beaufschlagt, die den Schlauchkörper (8) in Richtung seiner Schließposition drückt, wobei eine weitere Verlagerungseinrichtung vorgesehen ist, mittels welcher das weitere Befestigungselement (10) in Längsrichtung (L) verlagerbar und der Schlauchkörper (8) in Richtung seiner Öffnungsposition verlagerbar ist.

12. Leitungsdurchführung nach einem der Ansprüche 1 bis 11, **dadurch gekennzeichnet, dass** der Schlauchkörper (8) mit einem gasdichten Material ausgeführt ist.

13. Leitungsdurchführung nach einem der Ansprüche 1 bis 12, **dadurch gekennzeichnet, dass** innen an dem Schlauchkörper (8) ein elastisches Material angeordnet ist.

14. Leitungsdurchführung nach einem der Ansprüche 1 bis 13, **dadurch gekennzeichnet, dass** ein Abschottmittel vorgesehen ist.

## Claims

1. Line feedthrough (1) for guiding at least one line through a component, comprising a cladding tube (2), a fastening element (9) and at least one sealing element (8) which is in the form of a flexible hose body and arranged within the cladding tube (2), the hose body (8) being connected, in a first axial end region (5), to the fastening element (9) and it being possible to displace said hose body between a closed position, in which the hose body (8) at least partially closes a passage through the hose body (8), and an open position, in which a passage through the hose body (8) is at least partially unblocked,
**characterized in that**
a spring device (13; 26; 32) is provided that acts on the fastening element (9), which can be displaced in the axial direction relative to the cladding tube (2), with a force that presses the hose body (8) toward its closed position.

2. Line feedthrough according to claim 1, **characterized in that** the hose body (8) can be rotated along its longitudinal axis (L), the spring device (13) being designed as a torsion spring and the torsion spring (13) converting an axial displacement of the fastening element (9) into a rotation of the hose body (8).

3. Line feedthrough according to claim 1, **characterized in that** the spring device (32) is designed as a tension spring.

4. Line feedthrough according to any of claims 1 to 3, **characterized in that** two sealing members (100, 101) are provided which are mounted so as to be movable in the longitudinal direction (L) relative to one another, a first sealing member (100) which is at least partially tubular and a second sealing member (101) which is at least partially tubular each having, in mutually facing end regions, a plurality of circumferentially distributed, strip-shaped, in particular lamellar elements (102), mutually facing end regions of the strip-shaped elements (102) being displaced inward transversely to the longitudinal direction (L) at least in regions when the sealing members (100, 101) are displaced in the longitudinal direction (L) toward one another, due to the interaction of the strip-shaped elements (102) of the first sealing member (100) with the strip-shaped elements (102) of the second sealing member (101).

5. Line feedthrough according to any of claims 1 to 4, **characterized in that** a sensor device (28) is provided, by means of which at least a closed position of the hose body (8) can be determined.

6. Line feedthrough according to claim 5, **characterized in that** the sensor device (28) is designed as a contact sensor, in particular as an RFID sensor, or as a contactless sensor.

7. Line feedthrough according to any of claims 1 to 6, **characterized in that** the fastening element (9) is designed as an annular element.

8. Line feedthrough according to any of claims 1 to 7, **characterized in that** a displacement device (18) is provided, by means of which the fastening element (8) can be displaced in the longitudinal direction (L).

9. Line feedthrough according to claim 8, **characterized in that** the displacement device (18) has a lever element (19) which interacts in the longitudinal direction (L) with the annular element (9) in a fixed manner and is designed to interact with the cladding tube (2), in particular with a stop (3, 4) rigidly connected to the cladding tube (2).

10. Line feedthrough according to either claim 8 or claim 9, **characterized in that** the displacement device (18) comprises a grip element (24).

11. Line feedthrough according to any of claims 1 to 10, **characterized in that** the hose body (8) is connected to a further fastening element (10) in a second end region (6) remote from the first axial end region (5), a further spring device being provided that acts on the further fastening element (10), which can be displaced in the longitudinal direction (L) relative to the cladding tube (2), with a force that presses the hose body (8) toward its closed position, a further displacement device being provided by means of which the further fastening element (10) can be displaced in the longitudinal direction (L) and the hose body (8) can be displaced toward its open position.

12. Line feedthrough according to any of claims 1 to 11, **characterized in that** the hose body (8) is made of a gas-tight material.

13. Line feedthrough according to any of claims 1 to 12, **characterized in that** a resilient material is arranged on the inside of the hose body (8).

14. Line feedthrough according to any of claims 1 to 13, **characterized in that** a sealing means is provided.

## Revendications

1. Passage de conduit (1) pour le passage d'au moins un conduit à travers un composant, comportant un tube d'enveloppe (2), un élément de fixation (9) et au moins un élément d'étanchéité (8) réalisé sous forme de corps de tuyau flexible et disposé à l'intérieur du tube d'enveloppe (2), dans lequel le corps de tuyau (8) est relié à l'élément de fixation (9) dans une première zone d'extrémité axiale (5) et peut être déplacé entre une position de fermeture, dans laquelle le corps de tuyau (8) ferme au moins partiellement une traversée à travers le corps de tuyau (8), et une position d'ouverture, dans laquelle une traversée à travers le corps de tuyau (8) est au moins partiellement libérée,
**caractérisé en ce**
**qu**'un dispositif formant ressort (13; 26; 32) est prévu, lequel sollicite l'élément de fixation (9) pouvant être déplacé dans la direction axiale par rapport au tube d'enveloppe (2) par une force qui pousse le corps de tuyau (8) en direction de sa position de fermeture.

2. Passage de conduit selon la revendication 1, **caractérisé en ce que** le corps de tuyau (8) peut pivoter le long de son axe longitudinal (L), dans lequel le dispositif formant ressort (13) est conçu sous forme de ressort de torsion et le ressort de torsion (13) convertit un déplacement axial de l'élément de fixation (9) en un pivotement du corps de tuyau (8).

3. Passage de conduit selon la revendication 1, **caractérisé en ce que** le dispositif formant ressort (32) est conçu sous forme de ressort de traction.

4. Passage de conduit selon l'une des revendications 1 à 3, **caractérisé en ce que** deux éléments d'étanchéité (100, 101) montés mobiles l'un par rapport à l'autre dans la direction longitudinale (L) sont prévus, dans lequel un premier élément d'étanchéité (100) conçu en forme de tube au moins dans certaines zones et un second élément d'étanchéité (101) conçu en forme de tube au moins dans certaines zones présentent, dans des zones d'extrémité opposées l'une à l'autre, respectivement plusieurs éléments en forme de bandes (102), en particulier en forme de lamelles, répartis côté circonférence, dans lequel, lors d'un déplacement des éléments d'étanchéité (100, 101) dans la direction longitudinale (L) l'un vers l'autre, des zones d'extrémité opposées l'une à l'autre des éléments en forme de bandes (102) sont déplacées vers l'intérieur transversalement à la direction longitudinale (L), au moins dans certaines zones, par la coopération des éléments en forme de bandes (102) du premier élément d'étanchéité (100) avec les éléments en forme de bandes (102) du second élément d'étanchéité (101).

5. Passage de conduit selon l'une des revendications 1 à 4, **caractérisé en ce qu**'un dispositif formant capteur (28) est prévu, au moyen duquel au moins une position de fermeture du corps de tuyau (8) peut être déterminée.

6. Passage de conduit selon la revendication 5, **caractérisé en ce que** le dispositif formant capteur (28) est conçu comme un capteur de contact, en particulier comme un capteur RFID, ou comme un capteur sans contact.

7. Passage de conduit selon l'une des revendications 1 à 6, **caractérisé en ce que** l'élément de fixation (9) est conçu sous la forme d'un élément annulaire.

8. Passage de conduit selon l'une des revendications 1 à 7, **caractérisé en ce qu**'un dispositif de déplacement (18) est prévu, au moyen duquel l'élément de fixation (8) peut être déplacé dans la direction longitudinale (L).

9. Passage de conduit selon la revendication 8, **caractérisé en ce que** le dispositif de déplacement (18) présente un élément de levier (19) qui coopère d'une part avec l'élément annulaire (9) de manière fixe dans la direction longitudinale (L) et est conçu pour coopérer d'autre part avec le tube d'enveloppe (2), en particulier une butée (3, 4) reliée de manière fixe au tube d'enveloppe (2).

10. Passage de conduit selon l'une des revendications 8 ou 9, **caractérisé en ce que** le dispositif de déplacement (18) présente un élément formant poignée (24).

11. Passage de conduit selon l'une des revendications 1 à 10, **caractérisé en ce que** le corps de tuyau (8) est relié à un autre élément de fixation (10) dans une seconde zone d'extrémité (6) opposée à la première zone d'extrémité (5) axiale, dans lequel un autre dispositif formant ressort est prévu, lequel sollicite l'autre élément de fixation (10) pouvant être déplacé par rapport au tube d'enveloppe (2) dans la direction longitudinale (L) par une force qui pousse le corps de tuyau (8) en direction de sa position de fermeture, dans lequel un autre dispositif de déplacement est prévu, au moyen duquel l'autre élément de fixation (10) peut être déplacé dans la direction longitudinale (L) et le corps de tuyau (8) peut être déplacé en direction de sa position d'ouverture.

12. Passage de conduit selon l'une des revendications 1 à 11, **caractérisé en ce que** le corps de tuyau (8) est conçu avec un matériau étanche aux gaz.

13. Passage de conduit selon l'une des revendications 1 à 12, **caractérisé en ce qu'**un matériau élastique est disposé sur le corps de tuyau (8) à l'intérieur.

14. Passage de conduit selon l'une des revendications 1 à 13, **caractérisé en ce qu'**un moyen de cloisonnement est prévu.
